# EUROPÄISCHE PATENTSCHRIFT

(11) **EP 2 948 333 B1**
(45) Veröffentlichungstag und Bekanntmachung des Hinweises auf die Patenterteilung: **14.03.2018**
(21) Anmeldenummer: 14702443.4
(22) Anmeldetag: 23.01.2014
(51) Int. Cl.: B60K 28/14, B60L 3/04

(54) **VERFAHREN, VORRICHTUNG UND SYSTEM ZUM BETREIBEN EINER FAHRZEUGKOMPONENTE EINES FAHRZEUGS IN ABHÄNGIGKEIT EINES SICHERHEITSZUSTANDS DES FAHRZEUGS**
METHOD, DEVICE AND SYSTEM FOR OPERATING A VEHICLE COMPONENT OF A VEHICLE IN DEPENDENCE OF A SECURITY STATE OF THE VEHICLE
PROCÉDÉ, DISPOSITIF ET SYSTÈME POUR FAIRE FONCTIONNER UN COMPOSANT D'UN VÉHICULE EN FONCTION D'UN ÉTAT DE SÉCURITÉ DU VÉHICULE

(30) Priorität: 26.01.2013 DE 102013001325
(43) Veröffentlichungstag der Anmeldung: 02.12.2015
(73) Patentinhaber: Audi AG, 85045 Ingolstadt (DE)
(72) Erfinder: STADLER, Michael, 85110 Arnsberg (DE)
(74) Vertreter: Thielmann, Frank
(86) Internationale Anmeldenummer: PCT/EP2014/000164
(87) Internationale Veröffentlichungsnummer: WO 2014/114452

(56) Entgegenhaltungen:
- DE-A1-102010 054 463

## Beschreibung

Die Erfindung betrifft ein Verfahren zum Betreiben einer Fahrzeugkomponente eines Fahrzeugs mittels einer Steuervorrichtung in Abhängigkeit eines zu vorgebbaren Zeitpunkten auswertbaren Sicherheitszustands des Fahrzeugs gemäß dem Oberbegriff des Anspruchs 1. Des Weiteren betrifft die Erfindung eine Steuervorrichtung zum Ausführen des Verfahrens sowie ein Sicherheitssystem mit einer solchen Steuervorrichtung.

In vielen Kraftfahrzeugen ist heutzutage zusätzlich zu einer Verbrennungskraftmaschine und/oder in Verbindung mit einem Elektromotor eine sehr leistungsstarke Hochvoltbatterie vorgesehen, die eine große Menge an elektrischer Energie speichern kann, und von welcher im Fall eines Unfalls des Fahrzeugs oder auch in anderen Situationen, in welchen auf die Hochvoltbatterie eine übermäßige Belastung einwirkt, ein großes Gefahrenpotential ausgehen kann, insbesondere in einem energetisch gut geladenen Zustand. Es ist daher aus Sicherheitsgründen erforderlich, die Hochvoltbatterie situationsbedingt abschalten zu können, z.B. um zu vermeiden, dass sie dauerhaft Schaden nimmt oder sich entzündet oder auf sonstige Weise nachteilig auf andere Komponenten des Fahrzeugs einwirkt. Hierzu werden Sensoren im Fahrzeug oder auch direkt an der Batterie vorgesehen, mittels welchen erfasst werden kann, ob eine von außen auf das Fahrzeug bzw. die Batterie einwirkende Belastung einen kritischen Schwellwert überschreitet, um dann die Batterie abzuschalten.

Die gattungsbildende Offenlegungsschrift DE 10 2010 054 463 A1 zeigt eine Fahrzeugbatterie mit einem elektronischen Sensor, der eine Lagesensorik zur Erfassung eines Neigungswinkels des Fahrzeugs und/oder einen Beschleunigungssensor zur Erfassung einer auf das Fahrzeug wirkenden Beschleunigung, insbesondere in allen drei Raumachsen, und/oder eine Drehratensensorik zur Erfassung eines Drehwinkels des Fahrzeugs aufweist, wobei die Fahrzeugbatterie bei Überschreiten eines jeweiligen Schwellwertes spannungsfrei geschaltet werden kann, und wobei der Sensor an der Batterie angeordnet ist, so dass eine Schädigung der Batterie auch autonom erfasst werden kann, z.B. bei der Handhabung der Batterie zwecks Montage, und die Batterie auch autonom spannungsfrei geschaltet werden kann, wenn sie noch nicht in dem Fahrzeug montiert ist.

Die europäische Patentanmeldung EP 0 322 599 A1 zeigt eine Sicherheitseinrichtung in einem Kraftfahrzeug, welche dazu ausgebildet ist, auf Grundlage von Beschleunigungsmesswerten in allen drei Raumrichtungen eine Unfallsituation zu erkennen und einen Verbrennungsmotor des Fahrzeugs abzustellen, das Fahrzeug gegen Verlagerung durch Einlegen einer Feststellbremse zu sichern und das Fahrzeug stromlos zu schalten.

Die europäische Patentanmeldung EP 1 683 698 A2 zeigt ein Sicherheitssystem zum Steuern von Fahrzeugkomponenten eines Fahrzeugs mit Elektromotor im Falle eines Unfalls, insbesondere auch bei Hybridfahrzeugen, wobei Spannungssensoren oder Beschleunigungssensoren vorgesehen sind, die im Paar redundant nahe zueinander angeordnet sind und dazu ausgebildet sind, jeweils ein Kollisionssignal an eine Recheneinheit zu liefern, welche auf Grundlage mindestens zweier Kollisionssignale einen Kollisionszustand auswertet und bei Bedarf eine Abschaltung von Fahrzeugkomponenten, insbesondere dem Elektromotor, herbeiführt, wobei die Beschleunigungssensoren eine Beschleunigung in Fahrtrichtung erfassen und einer der Beschleunigungssensoren z.B. einem Airbag-Beschleunigungssensor entsprechen kann, und wobei aufgrund der Redundanz der Sensoren eine fehlerhafte Steuerung der Fahrzeugkomponenten ausgeschlossen werden kann.

Die amerikanische Patentschrift US 5,389,824 zeigt ein System zum Abschalten einer Stromversorgung eines elektrischen Antriebs in einem elektrisch angetriebenen Fahrzeug, wobei eine Vielzahl von unidirektional messenden Beschleunigungssensoren vorgesehen sein können, die mit einer Auswerteeinrichtung gekoppelt sind und für bestimmte Beschleunigungswerte entsprechend einem wahrscheinlichen Unfallzustand Signale erzeugen und an die Auswerteeinrichtung übermitteln können, so dass der elektrische Antrieb mittels eines Stromkreisunterbrechers abgeschaltet werden kann, und wobei für das Abschalten auch ein Fahrzustand des Fahrzeugs, insbesondere eine Geschwindigkeit relativ zu einem Hindernis, im Hinblick auf eine Kollisionsgefahr berücksichtigt werden kann.

Es ist eine Aufgabe der Erfindung, ein Verfahren und eine Vorrichtung bereitzustellen, mittels welchem bzw. welcher ein Sicherheitszustand eines Fahrzeugs erfasst werden kann und eine Fahrzeugkomponente des Fahrzeugs in Abhängigkeit des Sicherheitszustands auf sichere Weise betrieben werden kann.

Diese Aufgabe wird durch ein Verfahren mit den Merkmalen des Patentanspruchs 1 sowie durch eine Steuervorrichtung und ein Sicherheitssystem mit den Merkmalen des jeweiligen nebengeordneten Patentanspruchs gelöst. Vorteilhafte Ausgestaltungen mit zweckmäßigen Weiterbildungen der Erfindung sind in den abhängigen Patentansprüchen angegeben.

Die Erfindung geht aus von einem Verfahren zum Betreiben einer Fahrzeugkomponente eines Fahrzeugs mittels einer Steuervorrichtung in Abhängigkeit eines zu vorgebbaren Zeitpunkten auswertbaren Sicherheitszustands des Fahrzeugs, wobei der Sicherheitszustand entweder "Fahrzeug bzw. Fahrzeugkomponente sicher" oder "Fahrzeug bzw. Fahrzeugkomponente unsicher" ist, mit den Schritten:
a) Erfassen eines jeweiligen Messwertes jeweils mittels mindestens einer mit der Steuervorrichtung gekoppelten Sensoreinrichtung des Fahrzeugs;
b) Übermitteln des jeweiligen Messwerts an die Steuervorrichtung;
c) Auswerten des jeweiligen Messwerts mittels der Steuervorrichtung;
d) Auswerten des Sicherheitszustands mittels der Steuervorrichtung; und
e) in Abhängigkeit des im Schritt d) ausgewerteten Sicherheitszustands: Betreiben der Fahrzeugkomponente mittels der Steuervorrichtung.

Erfindungsgemäß sind die genannten Schritte dadurch weitergebildet, dass das Erfassen des jeweiligen Messwertes in Schritt a) in Bezug auf eine festgelegte räumliche Richtung erfolgt, indem eine Einwirkung auf das Fahrzeug in Bezug auf eine z-Richtung parallel zu einer Hochachse des Fahrzeugs erfasst wird,
wobei das Auswerten in Schritt c) in Bezug auf eine Position der jeweiligen Sensoreinrichtung an dem Fahrzeug erfolgt, indem Positionsdaten zu der jeweiligen Position mit dem jeweiligen Messwert kombiniert werden, wobei geprüft wird, ob der jeweilige Messwert über einem vorgebbaren Schwellwert für eine Belastung der Fahrzeugkomponente in der z-Richtung liegt.

Durch das Auswerten einer Einwirkung in z-Richtung können z.B. auch so genannte Unterfahrer, also z.B. Randsteine, Poller, Geschwindigkeitsbegrenzungsschwellen, Steine insbesondere auf Feldwegen, erkannt werden, welche bei vorbekannten Fahrzeugsicherheitssystem üblicherweise unberücksichtigt bleiben. Bevorzugt ist die Fahrzeugkomponente eine HochvoltBatterie. Das Erfassen der Messwerte und wahlweise ein Erzeugen von Messwertdaten in Bezug auf die z-Richtung und abhängig von der Position der jeweiligen Sensoreinrichtung liefert den Vorteil einer umfassenderen Analyse der Einwirkungen auf das Fahrzeug. Zwar sind bereits Beschleunigungssensoren bekannt, die in allen drei Raumrichtungen Messwerte aufnehmen können, jedoch liefern diese Sensoren keine Möglichkeit, speziell von unten auf das Fahrzeug einwirkende Einflüsse zu erfassen, und sie sind auch nicht dazu ausgebildet, eine auf das Fahrzeug einwirkende Beschleunigung auf einen Massenschwerpunkt der Fahrzeugkomponente zu beziehen. Letzteres ist erfindungsgemäß dadurch möglich, dass die Position der jeweiligen Sensoreinrichtung berücksichtigt wird, sei es die Position an dem Fahrzeug und/oder die Position relativ zu der Fahrzeugkomponente oder direkt an der Fahrzeugkomponente.

Der nach der Erfassung eines Messwertes vorgesehene Schritt c) kann ein Erzeugen von Messwertdaten umfassen, um zu ermöglichen, dass auch eine Analyse des Sicherheitszustands erfolgen kann, wenn Kraft- oder Impuls-Messwerte von bereits am Fahrzeug implementierten Sensoren erfasst werden und für die Analyse des Sicherheitszustands genutzt werden sollen. Zu solchen Sensoren können z.B. auch Dehnungsmessstreifen oder Körperschallsensoren gezählt werden. Aus Impulsmesswerten kann dann mit einem Zeitbezug zum Beispiel eine Beschleunigung ermittelt werden, die aussagekräftiger sein kann bei der Analyse des Sicherheitszustands als die Impulswerte selbst. Das Erzeugen der für die Analyse des Sicherheitszustands aussagekräftigsten Messwertdaten kann durch die Sensoreinrichtungen selbst durchgeführt werden, wenn sie in der Lage sind, zwischen einzelnen physikalischen Größen bzw. Parametern umzurechnen, es kann jedoch auch von der Steuervorrichtung durchgeführt werden, insbesondere damit bereits implementierte Sensoren ohne Nachrüsten oder Umkonfiguration nutzbar sind. Das Erzeugen von Messwertdaten bedingt dabei auch, dass Information über die absolute und/oder relative Position der Sensoreinrichtungen berücksichtigt wird. Diese Position kann der Sensoreinrichtung entweder bekannt sein oder übermittelt werden, oder aber das Erzeugen von Messwertdaten erfolgt erst in der Steuervorrichtung, in welcher alle absoluten/relativen Positionen der Sensoreinrichtungen hinterlegt sein können.

Das Betreiben in Schritt e) umfasst dabei für den Sicherheitszustand "Fahrzeug unsicher" bei eingeschalteter Fahrzeugkomponente ein Abschalten der Fahrzeugkomponente. Gemäß einer Variante des Verfahrens kann das Betreiben in einem zum Schritt e) alternativen Schritt e1) dabei für den Sicherheitszustand "Fahrzeug sicher" bei abgeschalteter Fahrzeugkomponente ein Einschalten der Fahrzeugkomponente umfassen, um bei sich änderndem Zustand das Fahrzeug wieder fahrtüchtig zu machen.

Als Sensoreinrichtung können z.B. Beschleunigungssensoren, Drucksensoren, Kraftsensoren, Impulssensoren oder Körperschallsensoren eingesetzt werden. Eine Einwirkung von unten kann dabei z.B. über eine Beschleunigung in z-Richtung erfasst und ausgewertet werden, die über einem bestimmten Schwellwert liegt, z.B. durch ein zu schnelles Überfahren einer Schwelle oder eines Bordsteins. Der Schwellwert ist speziell in Bezug auf die z-Richtung definiert, um die üblicherweise auf die x-y-Ebene fokussierte Auswertung des Sicherheitszustands des Fahrzeugs in Bezug auf die vertikale Achse zu erweitern. Besonders relevant für die Fahrzeugsicherheit ist dabei die Erfassung einer Einwirkung von unten auf das Fahrzeug, sei es weil das Fahrzeug auf einen Gegenstand zubewegt wird oder weil ein Gegenstand von unten gegen das Fahrzeug geschleudert wird. Eine zu große Einwirkung auf das Fahrzeug bzw. die Fahrzeugkomponente in z-Richtung kann auch dadurch entstehen, dass das Fahrzeug viel zu schnell über eine Rampe gefahren wird, z.B. in der nach unten führenden Einfahrt zu einer Tiefgarage, und dass dabei das Fahrzeug aufsitzt. In diesem Fall wirkt die Beschleunigung nach unten, und es besteht die Gefahr eines Kontakts des Fahrzeugs mit einer Schwelle und einer damit möglicherweise eingehenden Beschädigung der Fahrzeugkomponente.

Durch die Erfassung und Auswertung des jeweiligen Messwertes in Abhängigkeit der relativen und/oder absoluten Position der jeweiligen Sensoreinrichtung an dem Fahrzeug kann z.B. eine auf das Fahrzeug in z-Richtung an der Position der Sensoreinrichtung einwirkende Beschleunigung derart ausgewertet werden, dass die auf die Fahrzeugkomponente an der Position der Fahrzeugkomponente einwirkende resultierende Belastung bestimmt wird. Ist eine der Sensoreinrichtungen z.B. in einem Abstand von zwei Metern vor der Fahrzeugkomponente angeordnet, und liefert diese Sensoreinrichtung einen Beschleunigungswert, der über einem Schwellwert liegt, und liefert eine weitere der Sensoreinrichtungen, die an der Fahrzeugkomponente oder hinter der Fahrzeugkomponente vorgesehen ist, einen Beschleunigungswert, der unter einem Schwellwert liegt, so kann die Fahrzeugkomponente dennoch so betrieben werden, als wenn der Schwellwert nicht überschritten wäre, wenn aus den beiden Beschleunigungswerten und den Positionen der Sensoreinrichtungen ermittelt wird, dass an der Position der Fahrzeugkomponente die Beschleunigung unter dem Schwellwert liegt. Hierdurch kann die Auswertung der Messergebnisse und das Betreiben der Fahrzeugkomponente praktikabler und auch mit verbesserter Genauigkeit erfolgen. Bevorzugt sind zumindest zwei der Sensoreinrichtungen an einer Unterseite des Fahrzeugs angeordnet, insbesondere in Fahrtrichtung vor und hinter einem Mittelpunkt der Fahrzeugkomponente, in einem bestimmten Abstand relativ zu der Fahrzeugkomponente.

Bevorzugt ist die Position einer jeweiligen Sensoreinrichtung über einen Abstand der jeweiligen Sensoreinrichtung in Fahrtrichtung entsprechend einer x-Richtung gesehen zu einem Mittelpunkt der Fahrzeugkomponente definiert. Weiter bevorzugt werden verschiedene Sicherheitsparameter bzw. Messgrößen erfassende Sensoreinrichtungen miteinander kombiniert, so dass sowohl z.B. Beschleunigungsmesswerte als auch Druckmesswerte erfasst und ausgewertet werden können. Besonders bevorzugt werden in derselben Position in zumindest einer der Sensorpositionen mindestens zwei unterschiedliche Messgrößen erfasst, z.B. eine Beschleunigung und eine Kraft oder ein Druck.

Der Sicherheitszustand kann über mindestens einen Sicherheitsparameter definiert werden. Das Auswerten des Sicherheitszustands durch Bestimmen eines Wertes des Sicherheitsparameters impliziert dabei die positionsbezogene Analyse der Einwirkung auf das Fahrzeug in Abhängigkeit des Sicherheitsparameters. Je nachdem, welche Messgröße bzw. Variable für den Sicherheitsparameter definiert wird, also ob z.B. Beschleunigung, Kraft, Impuls, hat die Position der jeweiligen Sensoreinrichtung einen anderen Einfluss bei der Analyse: eine weit von der Fahrzeugkomponente entfernt angeordnete Sensoreinrichtung liefert einen Beschleunigungswert, der ohne Positionsbezug noch keine Aussagekraft für die auf die Fahrzeugkomponente einwirkende Beschleunigung hat. Wird hingegen eine Deformation an einer Tragstruktur aufgezeichnet, an welcher die Fahrzeugkomponente ebenfalls befestigt ist, so ist die Position der Sensoreinrichtung nicht von derselben Bedeutung, und der Messwert kann unter Umständen direkt ohne Berücksichtigung der Position genutzt werden. In diesem Spezialfall können die Messwertdaten dem Messwert selbst entsprechen. Nichtsdestotrotz kann auch hier eine Differenzierung zumindest dahingehend erfolgen, dass der Schwellwert in Abhängigkeit der Position des Deformationssensors definiert ist, also z.B. bei großem Abstand ein niedrigerer Schwellwert als bei kleinem Abstand. Die Definition der Schwellwerte ist dabei in Bezug auf die Art, das Material, die Belastbarkeit usw. der Tragstruktur zu definieren, also unter Berücksichtigung der vorrichtungstechnischen Besonderheiten eines jeweiligen Fahrzeugs.

Bevorzugt wird in dem Schritt a) ein Messwert für einen Fahrzustandsparameter zur Auswertung eines Fahrzustand des Fahrzeugs erfasst, wobei der Schwellwert ein auf den Fahrzustand bezogener Schwellwert ist. Dabei kann eine Einwirkung auf das Fahrzeug in der z-Richtung für einen jeweiligen Fahrzustand spezifisch erfasst und ausgewertet werden und das Abschalten in Reaktion auf die Einwirkung in z-Richtung unter Berücksichtigung des Fahrzustands erfolgen.

Der Schwellwert kann aus einer insbesondere für eine jeweilige Fahrzeugkomponente spezifischen Tabelle ausgelesen werden oder frei in Abhängigkeit von dem Fahrzustand definiert werden, z.B. in Abhängigkeit der Fahrzeuggeschwindigkeit, der Umgebungstemperatur und/oder der Temperatur der Fahrzeugkomponente, oder von in x- und/oder γ-Richtung auf das Fahrzeug wirkenden Beschleunigungen, oder von einer Beladung, d.h. einem Gesamtgewicht des Fahrzeugs. Hierdurch kann vermieden werden, dass die Fahrzeugkomponente zu schnell oder zu spät abgeschaltet wird. Denn bei einer sehr hohen Beladung des Fahrzeugs kann eine bestimmte Beschleunigung in z-Richtung bereits zu einem Bodenkontakt und damit der Gefahr einer Beschädigung einer Fahrzeugkomponente führen, welche bei einem kaum beladenen Fahrzeug noch durch das Feder-Dämpfer-System des Fahrzeugs abgedämpft werden kann. Gleiches gilt für die Geschwindigkeit: bei hoher Geschwindigkeit ist das Fahrzeug träger (größere Massenträgheit) und eine bestimmte Belastung oder ein Schock bzw. eine Beschleunigung in z-Richtung kann möglicherweise nicht so gut abgedämpft und/oder abgefedert werden wie bei einer geringen Geschwindigkeit. Auch ist damit zu rechnen, dass bei höheren Geschwindigkeiten eine bestimmte Beschleunigung in z-Richtung ein größeres Schadenspotential mit sich bringt als bei einer geringen Geschwindigkeit, allein weil im Falle einer Kollision mit einem Hindernis von unten die auf das Fahrzeug wirkenden Kräfte und Impulse größer sind. Eine Bodenberührung bei hoher Geschwindigkeit, z.B. über 90 km/h, richtet erwartungsgemäß einen größeren Schaden an dem Fahrzeug bzw. der Fahrzeugkomponente an als bei z.B. nur 10 bis 30 km/h.

Die Positionsdaten können zusammen mit den Messwerten von der jeweiligen Sensoreinrichtung bereitgestellt und an die Steuervorrichtung geliefert werden, sie können wahlweise auch in der Steuervorrichtung oder einem Fahrzeugssystem abgespeichert sein und die Messwerte dann jeweils automatisch zu den Positionsdaten zugeordnet werden, insbesondere über die jeweiligen Eingänge, über welche die Sensoreinrichtungen mit der Steuervorrichtung gekoppelt sind.

Das positionsbezogene Erfassen der Messwerte liefert auch den Vorteil, dass bereits vorhandene Sensoreinrichtungen für das Auswerten des Sicherheitszustands genutzt werden können, ohne diese neu anordnen zu müssen, also auch ohne sie unmittelbar an der Fahrzeugkomponente anordnen zu müssen. So kann ein Sicherheitssystem bereitgestellt werden, welches sich für eine Vielzahl unterschiedlicher Fahrzeuge bzw. Fahrzeug-Plattformen nutzen lässt, ohne dass im Detail eine Umkonfiguration im Hinblick auf eine spezifische Anordnung der Fahrzeugkomponente erfolgen muss. Mit anderen Worten kann z.B. eine Fahrzeugbatterie bei einem Vergleich zwischen mehreren Fahrzeugtypen oder -konfigurationen an unterschiedlichen Stellen angeordnet sein, ohne dass das Sicherheitssystem aufwändig angepasst werden muss.

Das Auswerten des Sicherheitszustands zu vorgebbaren Zeitpunkten kann dabei z.B. regelmäßig nach einem vorgebbaren Zeitintervall erfolgen, also kontinuierlich, oder erst dann wenn sich der Fahrzustand ändert, oder wahlweise auch in Abhängigkeit vordefinierter Geschwindigkeitsschwellen einer Fahrgeschwindigkeit. Die Zeitpunkte können z.B. durch einen Taktgeber der Steuervorrichtung vorgegeben werden. Bei einem Festlegen des Schwellwertes gilt, dass dies bevorzugt dann erfolgt, wenn der Fahrzustand sich ändert. Das vorgebbare Zeitintervall kann dann besonders klein gewählt werden, wenn der Fahrzustand sich stark ändert.

Gemäß einem vorteilhaften Ausführungsbeispiel wird der Schwellwert jeweils in Bezug auf die Position der Sensoreinrichtung definiert. Dabei kann für jede der Sensoreinrichtungen ein eigener Schwellwert definiert werden, insbesondere in Abhängigkeit davon, ob die Sensoreinrichtung an einer besonders empfindlichen Stelle der Fahrzeugkomponente, insbesondere Hochvoltbatterie, oder an einer Stelle positioniert ist, an welcher eine Einwirkung von unten nicht so schnell zu einem Schaden der Fahrzeugkomponente führt, z.B. weil die Fahrzeugkomponente in diesem Bereich eine spezielle Kapselung aufweist. Mit anderen Worten kann eine Mehrzahl positionsabhängiger Schwellwerte definiert werden, basierend auf welchen der Sicherheitszustand ausgewertet werden kann.

Wahlweise wird der Schwellwert auch in Bezug auf die erfasste Messgröße definiert. Der Schwellwert kann also nicht nur die Position berücksichtigen, sondern auch die erfasste Variable: bei einer erfassten Beschleunigung ist es möglicherweise von größerer Bedeutung, wie weit die Sensoreinrichtung von der zu überwachenden Komponente entfernt ist als bei einer erfassten Kraft. Jedoch können die Schwellwerte auch bei in unterschiedlichen Positionen an der Unterseite der Fahrzeugkomponente angeordneten Sensoreinrichtungen voneinander abweichen, insbesondere für den Fall dass die Fahrzeugkomponenten an unterschiedlichen Stellen unterschiedlich empfindlich in Bezug auf die Krafteinwirkung ist.

Gemäß einem vorteilhaften Ausführungsbeispiel wird der Schwellwert in Abhängigkeit eines Fahrzustands des Fahrzeugs und/oder eines Betriebszustands der Fahrzeugkomponente definiert, insbesondere zu vorgebbaren Zeitpunkten mittels der Steuervorrichtung, so dass eine Einwirkung auf das Fahrzeug in der z-Richtung in Abhängigkeit des spezifischen Schwellwertes für einen jeweiligen Fahrzustand erfasst und ausgewertet werden kann. Hierdurch kann z.B. in Bezug auf die Fahrgeschwindigkeit und/oder den Betriebszustand der Fahrzeugkomponente ausgewertet werden, ob eine Einwirkung von unten bereits zu einer Schädigung der Fahrzeugkomponente oder zumindest einem erhöhten Gefährdungspotential führt. Eine Berücksichtigung der Fahrzeuggeschwindigkeit liefert den Vorteil, dass besser erkannt werden kann, ob eine Einwirkung in z-Richtung auf einen Fahrzustand (z.B. eine Bewegung des Fahrzeugs beim schnellen Durchfahren einer Senke) oder auf eine Einwirkung von unten, z.B. eine tatsächliche Berührung durch ein Hindernis, zurückzuführen ist, z.B. bei der Auswertung von Beschleunigungsmesswerten. Bei einer hohen Geschwindigkeit kann eine bestimmte Beschleunigung in z-Richtung bereits gleichbedeutend mit einer Einwirkung von unten sein, wohingegen bei geringen Geschwindigkeiten ein Kontakt mit einem Hindernis noch nicht notwendigerweise vorliegt, insbesondere aufgrund der effektiveren Feder- und/oder Dämpfungswirkung der Federung des Fahrzeugs.

Die Fahrzeugkomponente kann z.B. in einem eingeschalteten Betriebszustand empfindlicher sein als in einem ausgeschalteten Betriebszustand, oder auch in Abhängigkeit einer bestimmten Betriebstemperatur oder ihrer Betriebsstunden besonders empfindlich sein. Handelt es sich z.B. um eine Fahrzeugkomponente mit schnell rotierenden Teilen, die aufgrund hoher Drehzahlen eine sehr hohe Massenträgheit aufweisen, so kann die Empfindlichkeit mit der Drehzahl steigen. Je höher die Drehzahl, desto früher ist eine solche Fahrzeugkomponente dann abzuschalten. Das Betreiben der Fahrzeugkomponente in Abhängigkeit eines auf den Fahrzustand bezogenen gleitenden Schwellwertes liefert damit ein genaueres und realitätsnäheres Verfahren zum Abschalten der Fahrzeugkomponente.

Gemäß einem vorteilhaften Ausführungsbeispiel wird der Schwellwert durch einen Betrag für eine, insbesondere von unten, in der z-Richtung auf die Fahrzeugkomponente einwirkende Kraft und/oder durch einen Betrag für einen, insbesondere von unten, in der z-Richtung auf die Fahrzeugkomponente einwirkenden Impuls definiert, wobei die Kraft und/oder der Impuls bevorzugt in mindestens zwei Positionen durch eine jeweilige an einer Unterseite des Fahrzeugs und/oder der Fahrzeugkomponente angeordnete Sensoreinrichtung erfasst wird. Hierdurch können so genannte Unterfahrer erfasst und ausgewertet werden, d.h. Kollisionen von unten, z.B. mit einem überfahrenen Stein. Auch eine Einwirkung durch eine von unten an das Fahrzeug bzw. die Fahrzeugkomponente stoßende Schwelle kann dabei gut erfasst werden. Selbst eine weitgehend impulsfreie Einwirkung von unten kann erfasst werden. Eine weitgehend impulsfreie Einwirkung kann z.B. im Zusammenhang mit einer Reparatur des Fahrzeugs auftreten, wenn das Fahrzeug durch einen Wagenheber angehoben wird, und der Wagenheber z.B. aus Versehen direkt an der Fahrzeugkomponente und nicht an einer Tragstruktur des Fahrzeugs zur Anlage gebracht wird. Wahlweise kann der Sicherheitsparameter zusätzlich auch über eine in oder entgegen der z-Richtung auf das Fahrzeug einwirkende Beschleunigung definiert werden, also über die Beschleunigungswerte als solche.

Dabei werden die Messwerte an mindestens zwei unterschiedlichen Positionen, insbesondere in zwei definierten Abständen zu einem Schwerpunkt der Fahrzeugkomponente erfasst. Hierdurch kann auf genauere Weise eine Beschädigung der Fahrzeugkomponente ausgewertet werden und ein Steuern der Fahrzeugkomponente realitätsnäher erfolgen, insbesondere weil die auf den Schwerpunkt der Fahrzeugkomponente einwirkende Beschleunigung ausgewertet werden kann, oder auch weil erfasst werden kann, ob eine bestimmte Kraft oder ein bestimmter Druck an einer besonders empfindlichen Stelle der Fahrzeugkomponente auf die Fahrzeugkomponente einwirkt bzw. eingewirkt hat.

Die Erfassung einer Kraft erfolgt dabei bevorzugt über einen an der Unterseite der Fahrzeugkomponente und/oder des Fahrzeugs angeordneten Drucksensor, z.B. auf Piezobasis, oder kapazitive oder induktive Drucksensoren. Die Erfassung eines Impulses erfolgt dabei bevorzugt über einzeln mit Zeitbezug erfasste Beschleunigungsmesswerte in der z-Richtung, aus welchen ein Integral gebildet wird.

Gemäß einem vorteilhaften Ausführungsbeispiel umfasst das Betreiben in Schritt e) für den Sicherheitszustand "Fahrzeug bzw. Fahrzeugkomponente unsicher" bei eingeschalteter Fahrzeugkomponente ein Abschalten der Fahrzeugkomponente umfasst und für den Sicherheitszustand "Fahrzeug bzw. Fahrzeugkomponente sicher" bei abgeschalteter Fahrzeugkomponente ein Einschalten der Fahrzeugkomponente. Hierdurch kann das Fahrzeug auch wieder automatisch in einen fahrtüchtigen Zustand gebracht werden, sobald erkannt wird, dass ein unsicherer Fahrzeugzustand nicht (mehr) vorliegt.

Gemäß einem vorteilhaften Ausführungsbeispiel ist die Fahrzeugkomponente eine Hochvoltbatterie, die mit einem elektrischen Antrieb zum Antreiben des Fahrzeugs gekoppelt ist, wobei die Hochvoltbatterie in Abhängigkeit von richtungs- und positionsabhängig ausgewerteten Messwerten von mindestens zwei Sensoreinrichtungen betrieben wird, die an einer Unterseite des Fahrzeugs angeordnet sind, insbesondere in Fahrtrichtung vor und/oder hinter einem Mittelpunkt oder Massenschwerpunkt der Hochvoltbatterie in einem vorgegebenen Abstand zu dem Mittelpunkt bzw. Massenschwerpunkt. Hierdurch kann eine Gefährdung durch die Hochvoltbatterie ausgeschlossen werden. Durch die an der Hochvoltbatterie angeordneten Sensoreinrichtungen kann eine Einwirkung auf die Hochvoltbatterie direkt erfasst werden, sei es eine schlagartige Einwirkung oder eine ansteigende Kraft ohne starken Impuls, die z.B. zu einer Verformung der Hochvoltbatterie führt.

Dank der Mehrzahl von Sensoreinrichtungen, also auch einer wahlweisen Redundanz der Sensoreinrichtungen (sofern unterschiedlichen Sensoreinrichtungen jeweils denselben Sicherheitsparameter erfassen), kann die Erfassung mit guter Genauigkeit erfolgen, und auch die Auswertung einer nur punktuellen Einwirkung, z.B. aufgrund eines überfahrenen Steins, kann genauer erfolgen. Durch die Anordnung in einem definierten Abstand bzw. an definierten Positionen kann ferner eine positionsabhängige Auswertung erfolgen. Erfassen die Sensoreinrichtungen z.B. eine Beschleunigung, so kann erfasst werden, wie ein bestimmter Impuls auf die Hochvoltbatterie sich auf den Schwerpunkt der Hochvoltbatterie auswirkt und ob der Impuls z.B. durch gedämpfte Lager der Hochvoltbatterie abgedämpft werden kann, insbesondere wenn er nur in einem Randbereich auf die Hochvoltbatterie einwirkt, oder bereits zu hoch ist, insbesondere weil er genau im Schwerpunkt auf die Hochvoltbatterie einwirkt.

Die Aufgabe wird auch durch eine Steuervorrichtung zum Betreiben einer Fahrzeugkomponente eines Fahrzeugs in Abhängigkeit eines zu vorgebbaren Zeitpunkten auswertbaren Sicherheitszustands des Fahrzeugs gelöst, wobei der Sicherheitszustand entweder "Fahrzeug bzw. Fahrzeugkomponente sicher" oder "Fahrzeug bzw. Fahrzeugkomponente unsicher" ist, wobei die Steuervorrichtung mit einer Schalteinrichtung sowie mit einer Mehrzahl von Sensoreinrichtungen koppelbar ist, die jeweils zum Erfassen eines Messwertes ausgebildet sind, und wobei die Steuervorrichtung zum Auswerten des Sicherheitszustands aus dem jeweiligen Messwert ausgebildet ist,
wobei erfindungsgemäß vorgesehen ist, dass die Steuervorrichtung dazu ausgebildet ist, den Messwert richtungsabhängig und mit Bezug zu Positionsdaten zu einer Position der jeweiligen Sensoreinrichtung an dem Fahrzeug zu erfassen und zu prüfen, ob der Messwert über einem Schwellwert für eine Belastung der Fahrzeugkomponente in Bezug auf eine z-Richtung parallel zu einer Hochachse des Fahrzeugs liegt.

Die Aufgabe wird auch durch ein Sicherheitssystem mit einer solchen Steuervorrichtung gelöst. Bevorzugt weist das Sicherheitssystem auf:
- eine Mehrzahl von Sensoreinrichtungen, die jeweils zum Erfassen eines Messwertes ausgebildet sind, wobei die Sensoreinrichtungen mit der Steuervorrichtung gekoppelt sind und dazu ausgebildet sind, den jeweiligen Messwert in Abhängigkeit einer festgelegten räumlichen Richtung zu erfassen, indem eine Einwirkung auf das Fahrzeug in Bezug auf eine z-Richtung parallel zu einer Hochachse des Fahrzeugs erfasst wird, und wobei die Sensoreinrichtungen jeweils dazu ausgebildet sind, den jeweiligen Messwert in Abhängigkeit einer Position der jeweiligen Sensoreinrichtung an dem Fahrzeug zu erfassen und Positionsdaten zu der Position der jeweiligen Sensoreinrichtung auszugeben;
- eine mit der Steuervorrichtung und der Fahrzeugkomponente gekoppelten Schalteinrichtung;
   wobei Steuervorrichtung dazu ausgebildet ist, die Schalteinrichtung in Abhängigkeit des Sicherheitszustands zu betätigen, insbesondere ein- oder auszuschalten.

Ein solches Sicherheitssystem kann in einem beliebigen Fahrzeug, insbesondere einem Kraftfahrzeug vorgesehen sein, und es kann zumindest teilweise auch direkt an der zu betreibenden Fahrzeugkomponente vorgesehen sein, insbesondere ein Bestandteil einer Hochvoltbatterie sein.

Gemäß einem vorteilhaften Ausführungsbeispiel ist mindestens eine der Sensoreinrichtungen ein Körperschallsensor. Bevorzugt weist der Körperschalisensor ein piezoelektrisches Element auf, welches insbesondere in einer Dämpfungsmasse gelagert ist, und das piezoelektrische Element ist zu einer Oberfläche der Fahrzeugkomponente gekoppelt, insbesondere über eine Membran. Bevorzugt ist der Körperschallsensor an einer unteren zu einem Boden, auf welchem das Fahrzeug steht oder fährt, weisenden Fläche der Fahrzeugkomponente vorgesehen. Hierdurch kann eine Einwirkung von unten über den Körperschall erfasst werden, was insbesondere im Hinblick auf die in Verbindung mit Hochvoltbatterien häufig verbauten Leichtbaustrukturen, insbesondere Kohlenstofffaserstrukturen vorteilhaft ist, da diese aufgrund ihrer Materialeigenschaften (insbesondere Härte) einen Schall gut weiterleiten. Gleiches gilt auch für metallische Strukturen.

Die mit Bezug zu dem erfindungsgemäßen Verfahren vorgestellten Ausführungsformen und deren Vorteile gelten entsprechend für die beanspruchte Steuervorrichtung bzw. das beanspruchte Sicherheitssystem.

Die vorstehend in der Beschreibung genannten Merkmale und Merkmalskombinationen sowie die nachfolgend in der Figurenbeschreibung genannten oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, wobei gleiche oder funktionsgleiche Elemente mit identischen Bezugszeichen versehen sind. Dabei zeigen:
- Fig. 1: in einer schematischen Seitenansicht ein Fahrzeug mit einer Hochvoltbatterie, weiches ein Sicherheitssystem mit einer Vielzahl von Sensoren und einer Steuervorrichtung zum Ausführen eines Verfahrens gemäß einem Ausführungsbeispiel der Erfindung aufweist;
- Fig. 2: in einer schematischen Seitenansicht ein Fahrzeug mit einer Hochvoltbatterie, welches ein Sicherheitssystem mit einer Vielzahl von in die Hochvoltbatterie integrierten Sensoren und einer Steuervorrichtung zum Ausführen eines Verfahrens gemäß einem Ausführungsbeispiel der Erfindung aufweist;
- Fig. 3a: in einer schematischen Darstellung den Ablauf eines Verfahrens gemäß einem Ausführungsbeispiel der Erfindung für eine eingeschaltete Fahrzeugkomponente; und
- Fig. 3b: in einer schematischen Darstellung den Ablauf eines Verfahrens gemäß einem Ausführungsbeispiel der Erfindung für eine abgeschaltete Fahrzeugkomponente.

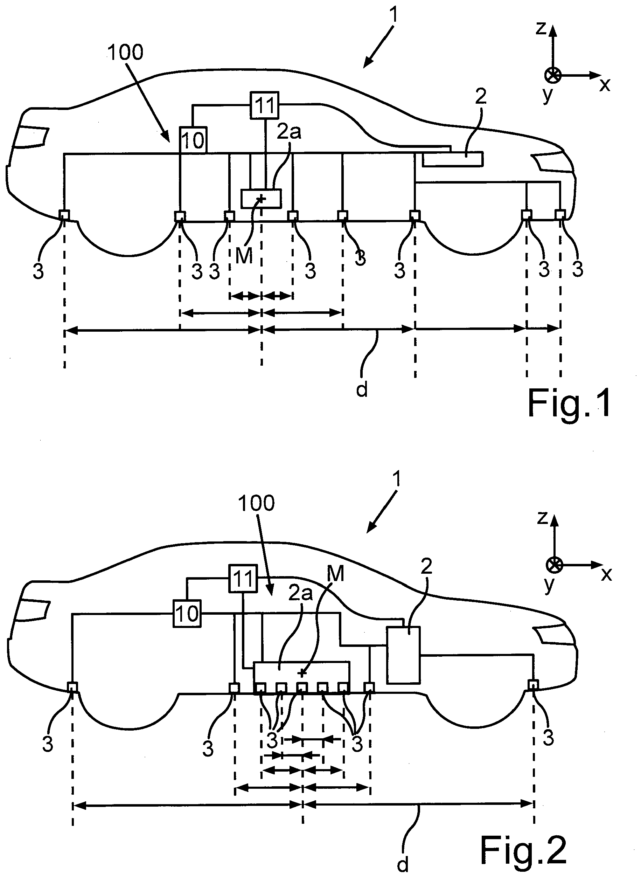

In der Fig. 1 ist ein Fahrzeug 1 mit einem Antrieb 2 und einer mit dem Antrieb 2 gekoppelten Fahrzeugkomponente 2a, hier einer Hochvoltbatterie 2a gezeigt. Das Fahrzeug 1 weist eine Steuervorrichtung 10 auf, die mit der Hochvoltbatterie 2a sowie mit einer Vielzahl von Sensoren 3 gekoppelt ist, wobei jeder der Sensoren 3 dazu ausgebildet ist, eine Beschleunigung zumindest in einer z-Richtung gemäß dem dargestellten Koordinatensystem zu erfassen, also in einer vertikalen Richtung. Die Steuervorrichtung 10 ist mit einer Schalteinrichtung 11 gekoppelt oder weist diese als Komponente auf, und über die Schalteinrichtung 11 können Fahrzeugkomponenten 2, 2a betrieben werden. Bevorzugt sind die Sensoren 3 dazu ausgebildet, eine Beschleunigung in Bezug auf alle drei Raumrichtungen zu erfassen. Die Steuervorrichtung 10 und die Sensoren 3 sind Teil eines Sicherheitssystems 100 des Fahrzeugs 1, mittels welchem vermieden werden kann, dass in einem unsicheren Zustand des Fahrzeugs 1 bzw. der Hochvoltkomponente 2a die Hochvoltkomponente 2a weiterhin aktiv bleibt.

In dem gezeigten Ausführungsbeispiel sind die Sensoren 3 allesamt an einer Unterseite des Fahrzeugs 1 angeordnet, was jedoch nicht notwendigerweise der Fall sein muss. Vielmehr können auch nur einzelne der Sensoren 3 an der Unterseite des Fahrzeugs vorgesehen sein. Der Vorteil der Anordnung an der Unterseite des Fahrzeugs 1 besteht z.B. darin, dass Sensoren 3 eingesetzt werden können, die neben der Beschleunigung auch eine (bevorstehende) Berührung bzw. Kollision der Unterseite mit einem Stein oder dergleichen Hindernis detektieren können, insbesondere auf optische Weise und auch zeitlich vor einer Kollision. Hierdurch kann die Steuervorrichtung 10 eine Abschaltung der Hochvoltbatterie 2a vor einer Kollision bewirken. Wie gezeigt, sind die Sensoren 3 in Fahrtrichtung gesehen vor und hinter einem Mittelpunkt M der Hochvoltbatterie 2a angeordnet. Die Fahrtrichtung entspricht hier dabei definitionsgemäß einer Geradeausfahrt des Fahrzeugs 1 in x-Richtung, wie dargestellt. Die Sensoren 3 sind jeweils in einem definierten Abstand zu dem Mittelpunkt M angeordnet, wobei der Abstand exemplarisch für einen der Sensoren 3 mit dem Bezugszeichen "d" gekennzeichnet ist. Dabei kann der Mittelpunkt M auch einem Massenschwerpunkt der Fahrzeugkomponente 2a entsprechen. Über den Abstand "d" kann zum einen die relative Position in Bezug auf die Fahrzeugkomponente 2a charakterisiert werden, zum anderen auch die absolute Position bzw. die Position relativ zu dem Fahrzeug, also z.B. einem fahrzeugeigenen Koordinatensystem.

Auch hat die Anordnung an der Unterseite den Vorteil, dass eine Beschleunigung, die von unten auf das Fahrzeug 1 wirkt, nicht abgedämpft wird durch sich verformende strukturelle Bauteile des Fahrzeugs 1, sondern unmittelbar an der Stelle der Einwirkung erfasst werden kann. Hierdurch kann auf genauere Weise ein Betreiben der HV-Komponente 2a erfolgen, insbesondere in Abhängigkeit eines insbesondere für eine bestimmte HV-Komponente fest vordefinierten oder in Abhängigkeit des Fahrzustands variabel festgelegten Schwellwertes für den Sicherheitsparameter, insbesondere für eine Beschleunigung. Alternativ zu Beschleunigungssensoren oder in Kombination mit Beschleunigungssensoren können die Sensoren 3 auch als Körperschallsensoren ausgebildet sein, welche einen Schlag oder eine Berührung der Fahrzeugunterseite mit einem Hindernis erfassen und in Abhängigkeit davon das Betreiben der Fahrzeugkomponente 2a ermöglichen. Bevorzugt ist mindestens ein Sensor 3 in Fahrtrichtung vor und wahlweise auch hinter der Fahrzeugkomponente 2a an der Unterseite des Fahrzeugs 1 vorgesehen.

In dem in der Fig. 2 gezeigten Sicherheitssystem 100 sind die Sensoren 3 in die Hochvoltbatterie 2a integriert, und sie sind zumindest teilweise an einer Unterseite der Hochvoltbatterie 2a angeordnet. Bei dieser Anordnung kann eine Einwirkung von unten, z.B. ein Impuls, insbesondere auch eine Beschleunigung, auf die Hochvoltbatterie 2a mit besonders guter Zuverlässigkeit und Genauigkeit durch die Sensoren 3 erfasst werden. Eine Verfälschung von Messwerten kann durch die unmittelbare Messung innerhalb oder im Randbereich der Hochvoltbatterie 2a ausgeschlossen werden. Ferner sind einzelne Sensoren 3 in Fahrtrichtung vor und hinter der Hochvoltbatterie 2a an der Unterseite des Fahrzeugs 1 vorgesehen. Auch sind die in bzw. an der Hochvoltbatterie 2a vorgesehenen Sensoren 3 in Fahrtrichtung gesehen vor und hinter einem Mittelpunkt M der Hochvoltbatterie 2a angeordnet. Die Sensoren 3 sind jeweils in einem definierten Abstand zu dem Mittelpunkt M angeordnet, wobei der Abstand exemplarisch für einen der Sensoren 3 mit dem Bezugszeichen "d" gekennzeichnet ist. Die Steuervorrichtung 10 des Sicherheitssystems 100 ist mit einer Schalteinrichtung 11 gekoppelt oder weist diese als Komponente auf, und über die Schalteinrichtung 11 können Fahrzeugkomponenten 2, 2a betrieben werden.

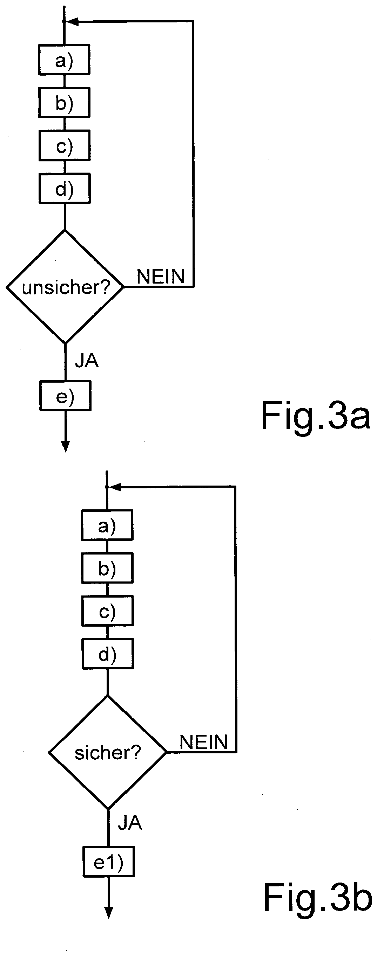

In der Fig. 3a ist ein Verfahren zum Betreiben einer eingeschalteten Fahrzeugkomponente gezeigt, welches zum Abschalten der Fahrzeugkomponente bei unsicherem Zustand des Fahrzeugs führt. In einem ersten Schritt a) erfolgt ein Erfassen eines Messwertes für einen Sicherheitsparameter mittels mindestens einer Sensoreinrichtung des Fahrzeugs. In einem zweiten Schritt b) erfolgt ein Erzeugen von den Messwert charakterisierenden Messwertdaten durch die Sensoreinrichtung, insbesondere ein Erzeugen eines dem Messwert entsprechenden Sicherheitssignals durch die Sensoreinrichtung. In einem dritten Schritt c) erfolgt ein Übermitteln der Messwertdaten, insbesondere des mindestens einen Sicherheitssignals, an eine Steuervorrichtung. In einem vierten Schritt d) erfolgt ein Auswerten des Sicherheitszustands durch Bestimmen eines Wertes des Sicherheitsparameters aus den Messwertdaten, insbesondere dem mindestens einen Sicherheitssignal, mittels der Steuervorrichtung. Es erfolgt eine Abfrage dahingehend, ob der Zustand des Fahrzeugs "unsicher" ist, um bei Bejahung ein Abschalten der Fahrzeugkomponente herbeizuführen. In einem fünften Schritt e) erfolgt in Abhängigkeit des im Schritt d) ausgewerteten Sicherheitszustand ein Abschalten der Fahrzeugkomponente mittels der Steuervorrichtung, wobei der Messwert bezüglich einer z-Richtung erfasst und ausgewertet wird und der Sicherheitszustand des Fahrzeugs in Abhängigkeit eines Fahrzustands des Fahrzeugs zu vorgebbaren Zeitpunkten, insbesondere in Echtzeit, definierten Schwellwertes ausgewertet wird.

In der Fig. 3b ist ein Verfahrensablauf gezeigt, welcher analog zu dem in der Fig. 3a gezeigten Verfahrensablauf ausgebildet ist, jedoch bezieht sich das Verfahren auf eine abgeschaltete Fahrzeugkomponente und es erfolgt eine Abfrage dahingehend, ob der Zustand des Fahrzeugs "sicher" ist, um bei Bejahung ein Einschalten der Fahrzeugkomponente herbeizuführen.

## Patentansprüche

1. Verfahren zum Betreiben einer Fahrzeugkomponente (2; 2a) eines Fahrzeugs (1) mittels einer Steuervorrichtung (10) in Abhängigkeit eines zu vorgebbaren Zeitpunkten auswertbaren Sicherheitszustands des Fahrzeugs, wobei der Sicherheitszustand entweder "Fahrzeug bzw. Fahrzeugkomponente sicher" oder "Fahrzeug bzw. Fahrzeugkomponente unsicher" ist, mit den Schritten:
a) Erfassen eines jeweiligen Messwertes jeweils mittels mindestens einer mit der Steuervorrichtung (10) gekoppelten Sensoreinrichtung (3) des Fahrzeugs;
b) Übermitteln des jeweiligen Messwerts an die Steuervorrichtung (10);
c) Auswerten des jeweiligen Messwerts mittels der Steuervorrichtung (10);
d) Auswerten des Sicherheitszustands mittels der Steuervorrichtung (10);
e) in Abhängigkeit des im Schritt d) ausgewerteten Sicherheitszustands: Betreiben der Fahrzeugkomponente mittels der Steuervorrichtung (10); **dadurch gekennzeichnet, dass** das Erfassen des jeweiligen Messwertes in Schritt a) in Bezug auf eine festgelegte räumliche Richtung erfolgt, indem eine Einwirkung auf das Fahrzeug (1) in Bezug auf eine z-Richtung parallel zu einer Hochachse des Fahrzeugs erfasst wird,
wobei das Auswerten in Schritt c) in Bezug auf eine Position der jeweiligen Sensoreinrichtung (3) an dem Fahrzeug erfolgt, indem Positionsdaten zu der jeweiligen Position mit dem jeweiligen Messwert kombiniert werden, wobei geprüft wird, ob der jeweilige Messwert über einem vorgebbaren Schwellwert für eine Belastung der Fahrzeugkomponente (2; 2a) in der z-Richtung liegt.

2. Verfahren nach Anspruch 1, **dadurch gekennzeichnet, dass** der Schwellwert jeweils in Bezug auf die Position der Sensoreinrichtung (3) definiert wird.

3. Verfahren nach Anspruch 1 oder 2, **dadurch gekennzeichnet, dass** der Schwellwert in Abhängigkeit eines Fahrzustands des Fahrzeugs (1) und/oder eines Betriebszustands der Fahrzeugkomponente (2; 2a) definiert wird.

4. Verfahren nach Anspruch 1, 2 oder 3, **dadurch gekennzeichnet, dass** der Schwellwert durch einen Betrag für eine, insbesondere von unten, in der z-Richtung auf die Fahrzeugkomponente (2; 2a) einwirkende Kraft und/oder durch einen Betrag für einen, insbesondere von unten, in der z-Richtung auf die Fahrzeugkomponente einwirkenden Impuls definiert wird, wobei die Kraft und/oder der Impuls bevorzugt in mindestens zwei Positionen durch eine jeweilige an einer Unterseite des Fahrzeugs und/oder der Fahrzeugkomponente angeordnete Sensoreinrichtung (3) erfasst wird.

5. Verfahren nach einem der vorhergehenden Ansprüche, **dadurch gekennzeichnet, dass** das Betreiben in Schritt e) für den Sicherheitszustand "Fahrzeug bzw. Fahrzeugkomponente unsicher" bei eingeschalteter Fahrzeugkomponente (2; 2a) ein Abschalten der Fahrzeugkomponente umfasst und für den Sicherheitszustand "Fahrzeug bzw. Fahrzeugkomponente sicher" bei abgeschalteter Fahrzeugkomponente ein Einschalten der Fahrzeugkomponente umfasst.

6. Verfahren nach einem der vorhergehenden Ansprüche, **dadurch gekennzeichnet, dass** die Fahrzeugkomponente eine Hochvoltbatterie (2a) ist, die mit einem elektrischen Antrieb (2) zum Antreiben des Fahrzeugs gekoppelt ist, wobei die Hochvoltbatterie in Abhängigkeit von richtungs- und positionsabhängig ausgewerteten Messwerten von mindestens zwei Sensoreinrichtungen (3) betrieben wird, die an einer Unterseite des Fahrzeugs (1) angeordnet sind, insbesondere in Fahrtrichtung vor und/oder hinter einem Mittelpunkt oder Massenschwerpunkt (M) der Hochvoltbatterie in einem vorgegebenen Abstand (d) zu dem Mittelpunkt.

7. Steuervorrichtung (10) zum Betreiben einer Fahrzeugkomponente (2; 2a) eines Fahrzeugs (1) in Abhängigkeit eines zu vorgebbaren Zeitpunkten auswertbaren Sicherheitszustands des Fahrzeugs, wobei der Sicherheitszustand entweder "Fahrzeug bzw. Fahrzeugkomponente sicher" oder "Fahrzeug bzw. Fahrzeugkomponente unsicher" ist,
wobei die Steuervorrichtung mit einer Schalteinrichtung (11) sowie mit einer Mehrzahl von Sensoreinrichtungen (3) koppelbar ist, die jeweils zum Erfassen eines Messwertes ausgebildet sind, und wobei die Steuervorrichtung zum Auswerten des Sicherheitszustands aus dem jeweiligen Messwert ausgebildet ist;
**dadurch gekennzeichnet, dass** die Steuervorrichtung (10) dazu ausgebildet ist, den jeweiligen Messwert richtungsabhängig und mit Bezug zu Positionsdaten zu einer Position der jeweiligen Sensoreinrichtung an dem Fahrzeug zu erfassen und zu prüfen, ob der jeweilige Messwert über einem Schwellwert für eine Belastung der Fahrzeugkomponente (2; 2a) in Bezug auf eine z-Richtung parallel zu einer Hochachse des Fahrzeugs (1) liegt.

8. Sicherheitssystem (100) zum Betreiben einer Fahrzeugkomponente (2; 2a) eines Fahrzeugs (1) in Abhängigkeit eines zu vorgebbaren Zeitpunkten auswertbaren Sicherheitszustands des Fahrzeugs, wobei der Sicherheitszustand entweder "Fahrzeug bzw. Fahrzeugkomponente sicher" oder "Fahrzeug bzw. Fahrzeugkomponente unsicher" ist und über mindestens einen zu vorgebbaren Zeitpunkten vorgebbaren Schwellwert definiert ist, mit einer Steuervorrichtung (10) nach Anspruch 7.

9. Sicherheitssystem nach Anspruch 8, **dadurch gekennzeichnet, dass** es aufweist;
- eine Mehrzahl von Sensoreinrichtungen (3), die jeweils zum Erfassen eines Messwertes ausgebildet sind, wobei die Sensoreinrichtungen mit der Steuervorrichtung (10) gekoppelt sind und dazu ausgebildet sind, den jeweiligen Messwert in Abhängigkeit einer festgelegten räumlichen Richtung zu erfassen, indem eine Einwirkung auf das Fahrzeug in Bezug auf eine z-Richtung parallel zu einer Hochachse des Fahrzeugs (1) erfasst wird, und wobei die Sensoreinrichtungen (3) jeweils dazu ausgebildet sind, den jeweiligen Messwert in Abhängigkeit einer Position der jeweiligen Sensoreinrichtung an dem Fahrzeug zu erfassen und Positionsdaten zu der Position der jeweiligen Sensoreinrichtung auszugeben;
- eine mit der Steuervorrichtung und der Fahrzeugkomponente gekoppelten Schalteinrichtung (11);
wobei die Steuervorrichtung dazu ausgebildet ist, die Schalteinrichtung in Abhängigkeit des Sicherheitszustands zu betätigen.

10. Sicherheitssystem nach Anspruch 8 oder 9, **dadurch gekennzeichnet, dass** mindestens eine der Sensoreinrichtungen ein Körperschallsensor ist.

## Claims

1. Method for operating a vehicle component (2; 2a) of a vehicle (1) by means of a control device (10) in dependence on a security state of the vehicle which can be evaluated at times that can be predetermined, wherein the security state is either "vehicle or vehicle component secure" or "vehicle or vehicle component insecure", with the steps:
a) Capturing a respective measured value in each case by means of at least one sensor unit (3) of the vehicle coupled to the control device (10);
b) Transmitting the respective measured value to the control device (10);
c) Evaluating the respective measured value by means of the control device (10);
d) Evaluating the security state by means of the control device (10);
e) In dependence on the security state evaluated in step d): operating the vehicle component by means of the control device (10);
**characterised in that** the capture of the respective measured value in step a) takes place with regard to a determined spatial direction, while an effect is captured on the vehicle (1) with respect to a z-direction parallel to the vertical axis of the vehicle,
wherein the evaluation in step c) takes place with respect to a position of the respective sensor unit (3) on the vehicle, while position data for the respective position are combined with the respective measured value, wherein it is examined whether the respective measured value is above a threshold value that can be predetermined for a load on the vehicle component (2; 2a) in the z-direction.

2. Method according to claim 1, **characterised in that** the threshold value is defined in each case with respect to the position of the sensor unit (3).

3. Method according to claim 1 or 2, **characterised in that** the threshold value is defined in dependence on a driving condition of the vehicle (1) and/or on an operating condition of the vehicle component (2; 2a).

4. Method according to claim 1, 2 or 3, **characterised in that** the threshold value is defined by an amount for a force acting, in particular from below, in the z-direction on the vehicle component (2; 2a) and/or by an amount for a pulse acting, in particular from below, in the z-direction on the vehicle component, wherein the force and/or the pulse is captured preferably in at least two positions by a respective sensor unit (3) arranged on a lower side of the vehicle and/or of the vehicle component.

5. Method according to any one of the previous claims, **characterised in that** the operation in step e) for the security state "vehicle or vehicle component insecure" when the vehicle component (2; 2a) is switched on comprises a switching off of the vehicle component and for the security state "vehicle or vehicle component secure" when the vehicle component is switched off comprises a switching on of the vehicle component.

6. Method according to any one of the previous claims, **characterised in that** the vehicle component is a high-voltage battery (2a), which is coupled with an electrical drive (2) for driving the vehicle, wherein the high-voltage battery is operated in dependence on measured values evaluated in a direction- and position-dependent manner by at least two sensor units (3), which are arranged on a lower side of the vehicle (1), in particular, in the driving direction in front of and/or behind a centre point or centre of mass (M) of the high-voltage battery at a predetermined distance (d) to the centre point.

7. Control device (10) for operating a vehicle component (2; 2a) of a vehicle (1) in dependence on a security state of the vehicle which can be evaluated at times that can be predetermined, wherein the security state is either "vehicle or vehicle component secure" or "vehicle or vehicle component insecure",
wherein the control device can be coupled with a switching device (11) as well as with a plurality of sensor units (3), which are designed in each case for capturing a measured value, and wherein the control device is designed for evaluating the security state from the respective measured value;
**characterised in that** the control device (10) is designed to capture the respective measured value in a direction-dependent manner and with respect to position data for a position of the respective sensor unit on the vehicle and to examine whether the respective measured value is above a threshold value for a load on the vehicle component (2; 2a) with respect to a z-direction parallel to a vertical axis of the vehicle (1).

8. Security system (100) for operating a vehicle component (2; 2a) of a vehicle (1) in dependence on a security state of the vehicle which can be evaluated at times that can be predetermined, wherein the security state is either "vehicle or vehicle component secure" or "vehicle or vehicle component insecure" and is defined via at least one threshold value that can be predetermined at times that can be predetermined, with a control device (10) according to claim 7.

9. Security system according to claim 8, **characterised in that** it has:
- a plurality of sensor units (3), which are in each case designed for capturing a measured value, wherein the sensor units are coupled with the control device (10) and are designed to capture the respective measured value in dependence on a determined spatial direction, while an effect is captured on the vehicle with respect to a z-direction parallel to the vertical axis of the vehicle (1), and wherein the sensor units (3) are in each case designed to capture the respective measured value in dependence on a position of the respective sensor unit on the vehicle and to output position data for the position of the respective sensor unit;
- a switching device (11) coupled with the control device and the vehicle component,
wherein the control device is designed to actuate the switching device in dependence on the security state.

10. Security system according to claim 8 or 9, **characterised in that** at least one of the sensor units is a body sound sensor.

## Revendications

1. Procédé pour piloter un composant de véhicule (2 ; 2a) d'un véhicule (1) au moyen d'un dispositif de commande (10) en fonction d'un état de sécurité, évaluable à des instants pouvant être prescrits, du véhicule,
dans lequel l'état de sécurité est soit « véhicule sécurisé ou composant de véhicule sécurisé » soit « véhicule non sécurisé ou composant de véhicule non sécurisé »,
avec les étapes :
a) détection d'une valeur mesurée respective à chaque fois au moyen d'au moins un dispositif capteur (3), couplé avec le dispositif de commande (10), du véhicule ;
b) transmission de la valeur mesurée respective au dispositif de commande (10) ;
c) évaluation de la valeur mesurée respective au moyen du dispositif de commande (10) ;
d) évaluation de l'état de sécurité au moyen du dispositif de commande (10) ;
e) en fonction de l'état de sécurité évalué à l'étape d) : pilotage du composant de véhicule au moyen du dispositif de commande (10) ;
**caractérisé en ce que** la détection de la valeur mesurée respective à l'étape a) s'effectue par rapport à une direction spatiale fixée en détectant une action sur le véhicule (1) par rapport à une direction z parallèle à un axe vertical du véhicule,
dans lequel l'évaluation à l'étape c) s'effectue par rapport à une position du dispositif capteur (3) respectif au niveau du véhicule en combinant des données de position concernant la position respective à la valeur mesurée respective, un test étant effectué pour savoir si la valeur mesurée respective se trouve au-delà d'une valeur de seuil pouvant être prescrite pour une charge du composant de véhicule (2 ; 2a) dans la direction z.

2. Procédé selon la revendication 1, **caractérisé en ce que** la valeur de seuil est définie à chaque fois par rapport à la position du dispositif capteur (3).

3. Procédé selon la revendication 1 ou 2, **caractérisé en ce que** la valeur de seuil est définie en fonction d'un état de conduite du véhicule (1) et/ou en fonction d'un état de fonctionnement du composant de véhicule (2 ; 2a).

4. Procédé selon la revendication 1, 2 ou 3, **caractérisé en ce que** la valeur de seuil est définie par une valeur pour une force agissant sur le composant de véhicule (2 ; 2a) dans la direction z, en particulier d'en bas, et/ou par une valeur pour une impulsion agissant sur le composant de véhicule dans la direction z, en particulier d'en bas, laquelle force et/ou laquelle impulsion est détectée de préférence dans au moins deux positions par un dispositif capteur (3) respectif agencé au niveau d'un dessous du véhicule et/ou du composant de véhicule.

5. Procédé selon l'une quelconque des revendications précédentes, **caractérisé en ce que**, pour l'état de sécurité « véhicule ou composant de véhicule non sécurisé » en présence d'un composant de véhicule (2 ; 2a) en service, le pilotage à l'étape e) comprend un arrêt du composant de véhicule et, pour l'état de sécurité « véhicule ou composant de véhicule sécurisé » en présence d'un composant de véhicule à l'arrêt, il comprend une mise en service du composant de véhicule.

6. Procédé selon l'une quelconque des revendications précédentes, **caractérisé en ce que** le composant de véhicule est une batterie à haute tension (2a) qui est couplée à une propulsion électrique (2) afin de propulser le véhicule, laquelle batterie à haute tension est pilotée en fonction de valeurs mesurées, évaluées en fonction d'une direction et d'une position, d'au moins deux dispositifs capteurs (3) qui sont agencés au niveau d'un dessous du véhicule (1), en particulier dans la direction de conduite avant et/ou après un centre ou centre de gravité (M) de la batterie à haute tension à une distance prédéterminée (d) du centre.

7. Dispositif de commande (10) pour piloter un composant de véhicule (2 ; 2a) d'un véhicule (1) en fonction d'un état de sécurité, évaluable à des instants pouvant être prescrits, du véhicule,
dans lequel l'état de sécurité est soit « véhicule sécurisé ou composant de véhicule sécurisé » soit « véhicule non sécurisé ou composant de véhicule non sécurisé »,
dans lequel le dispositif de commande peut être couplé à un dispositif de commutation (11) ainsi qu'à une multiplicité de dispositifs capteurs (3) qui sont conçus pour détecter à chaque fois une valeur mesurée
et dans lequel le dispositif de commande est conçu pour évaluer l'état de sécurité à partir de la valeur mesurée respective,
**caractérisé en ce que** le dispositif de commande (10) est conçu pour détecter la valeur mesurée respective en fonction de la direction et par rapport à des données de position concernant une position du dispositif capteur respectif au niveau du véhicule et pour tester si la valeur mesurée respective se trouve au-delà d'une valeur de seuil pour une charge du composant de véhicule (2 ; 2a) par rapport à une direction z parallèle à un axe vertical du véhicule (1).

8. Système de commande (100) pour piloter un composant de véhicule (2 ; 2a) d'un véhicule (1) en fonction d'un état de sécurité, évaluable à des instants pouvant être prescrits, du véhicule,
dans lequel l'état de sécurité est soit « véhicule sécurisé ou composant de véhicule sécurisé » soit « véhicule non sécurisé ou composant de véhicule non sécurisé » et est défini par l'intermédiaire d'au moins une valeur de seuil pouvant être prescrite à des instants pouvant être prescrits, avec un dispositif de commande (10) selon la revendication 7.

9. Système de sécurité selon la revendication 8, **caractérisé en ce qu'**il comporte :
- une multiplicité de dispositifs capteurs (3), qui sont conçus pour détecter à chaque fois une valeur mesurée, lesquels dispositifs capteurs sont couplés au dispositif de commande (10) et sont conçus pour détecter la valeur mesurée respective en fonction d'une direction spatiale fixée en détectant une action sur le véhicule par rapport à une direction z parallèle à un axe vertical du véhicule (1) et lesquels dispositifs capteurs (3) sont conçus à chaque fois pour détecter la valeur mesurée respective en fonction d'une position du dispositif capteur respectif au niveau du véhicule et pour délivrer des données de position concernant la position du dispositif capteur respectif ;
- un dispositif de commutation (11) couplé au dispositif de commande et au composant de véhicule ;
dans lequel le dispositif de commande est conçu pour actionner le dispositif de commutation en fonction de l'état de sécurité.

10. Système de sécurité selon la revendication 8 ou 9, **caractérisé en ce qu'**au moins l'un des dispositifs capteurs est un capteur de bruit de structure.
